Europäisches Patentamt

European Patent Office

Office européen des brevets

(19)

(11) Numéro de publication: **0 133 115**
**B1**

(12) # FASCICULE DE BREVET EUROPÉEN

(45) Date de publication du fascicule du brevet:
05.11.86

(51) Int. Cl.⁴: **B 60 N 1/04**

(21) Numéro de dépôt: **84401522.2**

(22) Date de dépôt: **19.07.84**

(54) Siège articulé de véhicule automobile.

(30) Priorité: 21.07.83 FR 8312057

(43) Date de publication de la demande:
13.02.85 Bulletin 85/7

(45) Mention de la délivrance du brevet:
05.11.86 Bulletin 86/45

(84) Etats contractants désignés:
DE GB IT SE

(56) Documents cité:
FR-A-823 912
FR-A-1 596 506
FR-A-2 278 295
GB-A-2 017 809
GB-A-2 050 153
GB-A-2 072 881
GB-A-2 074 020
GB-A-2 102 674
US-A-2 102 979
US-A-2 271 925
US-A-2 516 712
US-A-2 875 809
US-A-2 925 122

(73) Titulaire: **REGIE NATIONALE DES USINES RENAULT, Boîte postale 103 8-10 avenue Emile Zola, F-92109 Boulogne- Billancourt (FR)**

(72) Inventeur: **Bellini, Mario, 11 Corso Venezia, I-20121 Milan (IT)**
Inventeur: **Bellot, Dominique, 15, Quai Boissy- d'Anglas, F-78380 Bougival (FR)**
Inventeur: **Larsonneur Jean- François, 2, Maurice Ravel, F-78100 Saint- Germain- En- Laye (FR)**
Inventeur: **Laporte, Alain, 24, boulevard Léon- Louesse, F-92500 Rueil Malmaison (FR)**

(74) Mandataire: **Ernst- Schonberg, Michel, REGIE NATIONALE DES USINES RENAULT (S. 0604), F-92109 Boulogne Billancourt Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un siège articulé de véhicule automobile monté sur une embase, dont l'assise peut s'incliner autour d'un premier axe horizontal et dont le dossier est guidé sur l'assise au moyen d'une articulation, de sorte que le dossier et l'assise peuvent être amenés à l'état chargé dans des positions différentes par rapport à l'embase et dans lequel un moyen de commande attague le dossier directement ou par l'intermédiaire d'un bras. Un tel siège, connu par le brevet FR-A 2 278 295, utilise une articulation entre l'assise et le dossier dans le but de parfaire le soutien du dos de l'occupant du siège dans ses diverses positions tout en évitant le déplacement relatif du dossier par rapport à l'occupant. Le problème à la base de l'invention consiste à conserver la position de l'appui lombaire conféré par le dossier quelle que soit son inclinaison sans constituer de gêne pour l'éventuel passager du véhicule qui se trouve assis derrière ce siège.

Pour supprimer de telles gênes, on s'est orienté vers la combinaison du dossier inclinable précité et d'une assise également mobile, cette dernière pouvant soit se déplacer horizontalement, soit se déplacer horizontalement et simultanément monter et descendre ou au contraire tout en s'inclinant sur l'horizontale en relevant la partie avant et en plongeant la partie arrière au fur et à mesure de l'inclination du dossier.

En utilisant l'un quelconque de ces sièges, et notamment en inclinant son dossier, l'occupant réduit son espace libre et/ou l'espace de l'occupant du siège arrière par le fait que l'assise du siège avant a reculé, ou que la partie arrière de ladite assise a plongé, ceci a pour conséquence de réduire la hauteur au dessus du plancher de l'arrière du siège, et la hauteur de passage des jambes de l'occupant du siège arrière.

On s'est donc orienté vers l'étude des sièges articulés, dont le dossier est conjugué à l'assise et où l'inclinaison du dossier occasionne des déplacements respectifs de l'assise et du dossier aussi minimes que possible, pour ne pas porter préjudice au confort de l'utilisateur.

Le brevet FR-A-1 596 508 décrit un siège à deux appuis mobiles (assise et dossier) par coulissement dans trois rainures d'un bâti fixe. Ce siège est d'une fabrication délicate et nécessite une parfaite définition des trois rainures de coulissement prévues sur la face intérieure des flancs du bâti qui permettent aux deux appuis du siège de coulisser par rapport au bâti fixe tout en maintenant sensiblement constant l'angle du dièdre formé entre l'assise et le dossier.

Auissi, par rapport au FR-A-2 278 295 qui décrit déjà les éléments connus du préambule de la revendication 1 de la présente demande, l'invention est caractérisé en ce que le vérin de commande conjuguant les déplacements angulaires de l'assise et du dossier est disposé entre la base inférieure d'un armature de dossier articulée autour d'un axe horizontal lié à l'embase et une coquille reliée à l'embase par l'autre axe horizontal, tandis qu'un capitonnage de l'assise et du dossier est emboîté sur ladite armature et monté à déplacement relatif par rapport à ladite armature.

Le siège ainsi réalisé permet une inclinaison continue du dossier et dans une moindre mesure l'abaisement de la postérieure de l'assise.

Dans une première variante de réalisation, la coquille est portée à articulation à l'extrémité de bielles elles-mêmes articulées sur l'embase tandis qu'un premier vérin de commande disposé entre l'embase et les bielles modifie la position longitudinale de l'assise et qu'un deuxième vérin de commande, disposé entre l'embase et un levier de renvoi articulé sur ladite embase, modifie inclinaison du dossier articulé sur la partie postérieure de l'assise et possédant une extrémité inférieure accrochée audit levier de renvoi.

Le siège ainsi réalisé permet un basculement vers l'avant dans le but de dégager le seuil d'accès aux places arrières du véhicule. A cet effet, l'extrémité du premier vérin est soit verrouillée, soit montée à déplacement dans une glissière fixée à l'embase du siège.

Dans une deuxième variante de réalisation, la coquille est portée à articulation sur l'embase tandis qu'un premier vérin de commande disposé entre l'embase et un levier de commande articulé sur la dite embase cinématiquement relié à l'extrémité inférieure du dossier par l'ontermédiaire d'une bielle articulée sur ce levier de commande, modifie l'inclinaison de la coquille et qu'un deuxième vérin de commande monté entre le levier de commande et l'extrémité inférieure du dossier conjugue les inclinaisons du dossier avec celles de l'assise.

Les différents exemples de réalisation du siège utilisent avantageusement des embases ou piétements étroits qui confèrent un espace de rangement de part et d'autre de l'embase entre le plancher et la face inférieure de la coquille et un volume d'habitabilité susceptible de permettre l'extension des jambes d'un passager occupant une position assise derrière le siège précité.

Les variations d'inclinaison de l'assise en fonction de l'angle d'inclinauson du dossier répondent à des règles constructives et ergonomiques du siège.

Les moyens de commande seront avantageusement constitués par exemple par des vérins à gaz associés ou non à des ressorts de suspension dont les déplacements sont placés sous la dependance d'un levier de blocaqe et de déblocage de la tige de commande du vérin.

D'autres caractéristiques et avantages du siège apparaîtront à la lecture de la description faite en référence des dessins annexés dont les figures schématiques ont pour but de faire comprendre comment l'invention peut être mise en pratique.

Sur ces dessins:
Les figures 1 et 2 représentent schématiquement une première variante de réalisation du siège dans sa position d'utilisation et dans sa position plus inclinée.

Les figures 3 et 4 représentent schématiquement une deuxième variante de réalisation du siège dans sa position d'utilisation et dans sa position plus inclinée,

Les figures 5 et 6 représentent schématiquement une troisième variante de réalisation du siège dans sa position d'utilisation et dans sa position plus inclinée.

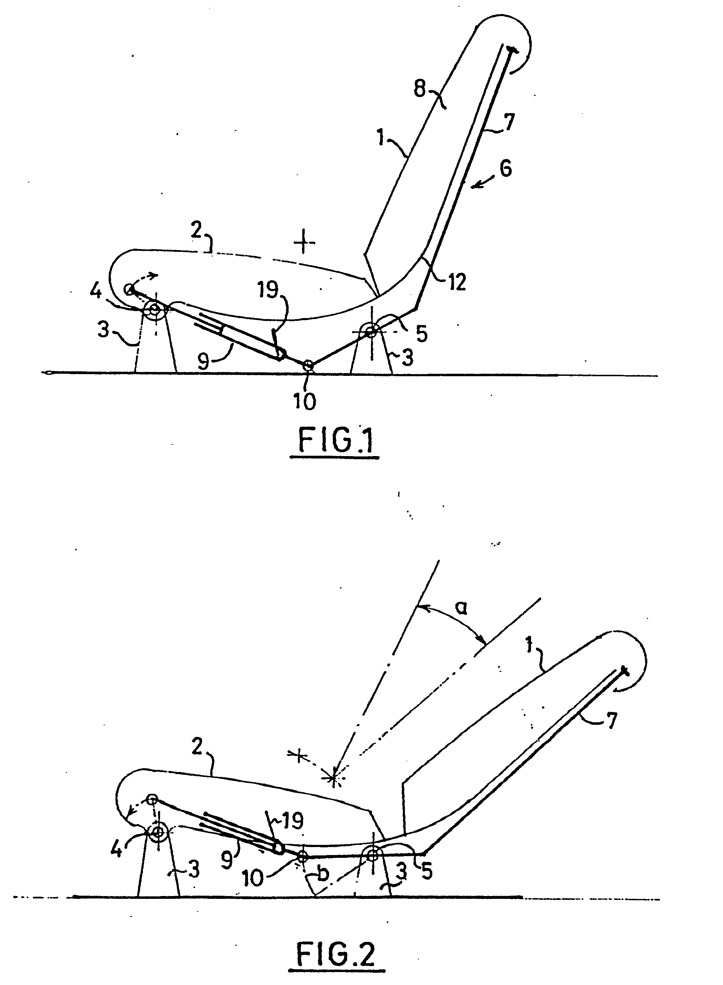

Le siège représenté aux figures 1 et 2 se compose d'un dossier 1 et d'une assise 2 montés sur une embase 3. L'embase 3 porte un premier axe horizontal 4 autour duquel la partie antérieure de l'assise est montée de façon inclinable. Le dossier 1 est monté à articulation autour d'un deuxième axe horizontal 5 également porté par l'embase 3. A cet effet, le dossier 1 est constitué par une armature 6 dont les montants 7 sont articulés autour de l'axe 5 et l'ensemble de l'assise 2 et de l'armature 6 à montants 7 est recouvert d'une matelassure d'habillage ou d'un capitonnage 8.

Un moyen de commande consitué par un vérin à gaz ou à huile 9 connu en soi est attelé d'une part à un axe 10 porté par la base de l'armature 6 du dossier 1, et d'autre part à la partie postérieure de l'assise 2 ou plus particulièrement à l'axe 4.

Dans cet agencement le dossier 1 et l'assise 2 peuvent être amenés sous l'effet de la charge représentée par l'occupant du siège, dans des positions différentes, lorsque l'occupant du siège actionne le vérin 9. A cet effet, le vérin 9 est manoeuvrable à titre d'exemple par un levier 19 de commande de blocage et de déblocage de la tige du vérin. La publication FR-A-2 335 136 décrit un tel mode de réalisation.

L'agencement proposé de l'assise 2, du dossier 1 et du vérin 9 permet une conjugaison des déplacements angulaires de l'assise 2 et du dossier 1.

A cet effet, l'assise 2 est constituée par l'ensemble de la partie correspordante de la matelassure d'habillage 8 et par une coquille 12 reposant par son bord sur l'armature 6. La matelassure 8 est également emboîtée sur l'armature 6 dans le but de permettre un déplacement relatif entre l'armature et la matelassure au cours des modifications d'inclinaison de l'armature 6.

A titre d'exemple la matelassure 8 pourra être constituée par un rembourrage moulé porteur de rainures de coulissement des montants 7 de l'armature 6. Celle-ci pourra avantageusement être constituée par une fourche tubulaire dont deux dents constituent les montants 7.

Ce fonctionnement du siège est le suivant:

Le siège chargé est soumis à des efforts d'appuis qui s'exercent sur l'assise 2 et sur le dossier 1. Sous l'action du levier 19 manoeuvré dans un sens prédéterminé, le vérin 9 est mis à l'atmosphère et le dossier 1 s'incline d'un angle â dont la valeur correspond à la position désirée du dossier 1.

La coquille 12 en appui sur l'armature s'incline d'un angle sensiblement plus petit que l'angle â.

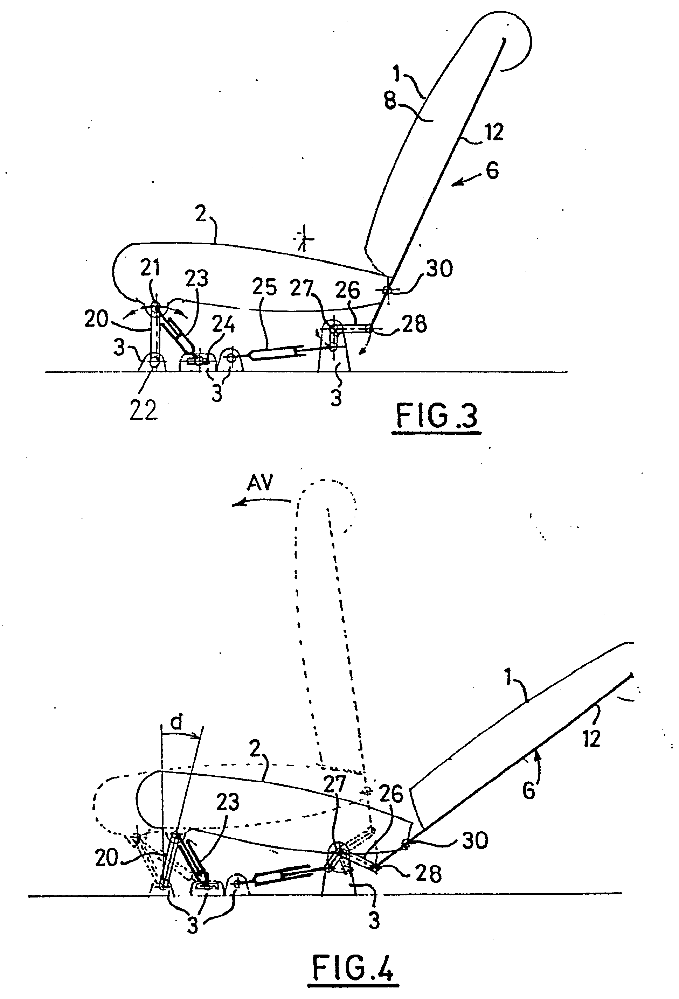

Le siège représenté aux figures 3 et 4 possède des organes similaires des éléments 1, 2, 3, 6, 8, 12 du siège précédent dont l'agencement ne nécessite pas une nouvelle description.

L'assise 2 ou la coquille 12 est portée à articulation autour d'un axe 21 à l'extrémité d'une bielle 20 montée à rotation autour d'un axe 22 sur l'embase 3. L'axe 21 porte l'ancrage d'un premier vérin 23 disposé ainsi entre l'embase 3 et la bielle 20. Le corps du vérin est monté au besoin à déplacement longitudinal sur l'embase 3. A cet effet, l'embase 3 porte une glissière longitudinale 24 dans laquelle peut être monté à coulissement à titre d'exemple un patin porteur de l'axe d'articulation du corps du vérin 23.

Un deuxième vérin 25 est disposé entre l'embase 3 et un ensemble de leviers de renvoi 26 articulés autour d'un axe 27 porté par l'embase 3. Le levier de renvoi porte par ailleurs un axe 28 d'articulation et de commande de déplacement de la partie inférieure de l'armature 6 du dossier 1.

L'agencement et la forme des leviers de renvoi 26 favorise l'implantation rationnelle du deuxième vérin dans le soubassement du siège constitutif de l'embase 3.

De façon similaire à ce qui a été dit précédemment, la coquille 12 de l'assise 2 peut être en appui sur l'armature 6.

Selon le mode de réalisation préférentiel de cette variante de siège, l'armature 6 est montée à articulation autour d'un axe 30 porté par la partie postérieure de l'assise 2.

Le fonctionnement du siège est le suivant:

a) Commande du vérin 23:

En supposant le vérin 23 immobilisé par rapport à la glissière 24, on voit que l'extension du vérin 23 a pour effet de déplacer angulairement la bielle 20 sutour de l'axe 22. Ce déplacement angulaire "d" a pour effet d'avancer ou de reculer la coquille 12 en suivant une trajectoire courbe.

Lorsque le vérin 25 est immobilisé, on voit aussi que l'avance ou le recul de la coquille 12 a pour effet d'exercer un effort sur l'axe d'articulation 30 et par voie de conséquence un effort dans l'armature 6 qui est traduit en une rotation résultante du levier de renvoi 26 autour de l'axe 27 dans le sens horaire.

b) Commande du vérin 25:

En supposant le vérin 23 immobilisé, on constate que l'extension du vérin 25 a pour effet de déplacer le levier de renvoi 26 autour de l'axe 27 dans le sens anti-horaire qui est traduit en une rotation de l'armature 6 autour de l'axe d'articulaticn 30 et un déplacement angulaire du seul dossier 1.

Les diverses fonctions des vérins 23, 25 appraitront ci-après plus clairement à la lecture du tableau résumé:

| Fonction \ Vérin | 23 | 25 |
|---|---|---|
| Avance, recul Assise | X | |
| Inclinaison dossier | X | X |
| Basculement du siège | X débrayage | |

Il est à remarquer que le basculement du siège selon l'invention est recherché pour faciliter l'accès aux sièges arrières d'un véhicule a une seule porte latérale. Dans une telle hypothèse, la base du vérin 23 est déplacée dans la glissière 24 à la suite d'une commande de déverrouillage préalable et d'une poussée manuelle exercée sur le dossier dans le sens de la flèche AV.

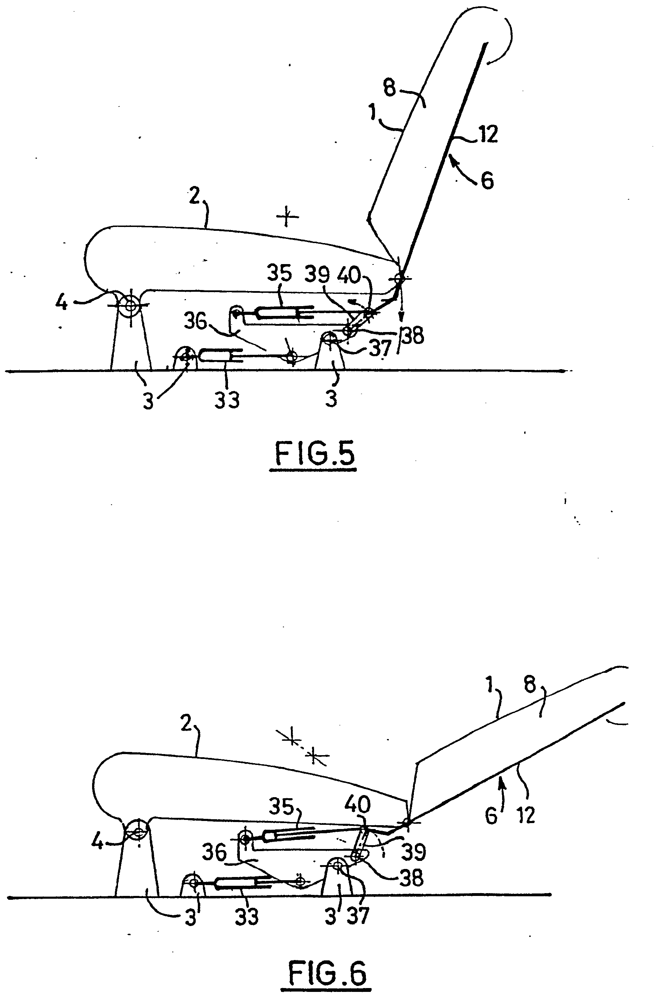

Le siège représenté aux figures 5 et 6 possède des organes similaires des éléments 1, 2, 3, 9, 6, 8, 12 du siège précédent décrit en référence des figures 1, 2.

L'assise 2 ou la coquille 12 est portée à articulation autour de l'axe horizontal 4 porté par l'embase 3.

Un premier vérin 33 est disposé entre l'embase 3 et un levier de commande 36 articulé sur l'embase 3 autour d'un axe 37. Le levier 36 porte l'axe d'articulation 38 de l'extrémité d'une bielle 39 dont l'autre extrémité porte un axe d'accrochage 40 de l'extrémité inférieure de l'armature 6 du dossier 1. L'axe 40 reçoit la poussée d'un deuxième vérin 35 monté entre le levier 36 et la base du dossier qui peut être confondue avec l'axe 40.

Les diverses fonctions des vérins 33, 35 apparaîtront ci-après plus clairement la lecture du tableau résumé:

| fonction \ vérin réalisée | 33 | 35 |
|---|---|---|
| montée descente assise | X | |
| inclinaison dossier | | X |

Dans les diverses variantes de réalisation du siège, il sera bien entendu possible d'actionner au moyen de l'un quelconque des vérins 9, 23, 25, 33, 35 une came portée par exemple par l'élément cinématique qui reçoit la poussée du vérin. A titre d'exemple le levier de commande 36 porte ainsi un chemin de came qui permet de réduire et/ou d'amplifier les déplacements de l'assise et/ou du dossier chaque fois que cela est souhaité.

Il est à noter que les sièges à dossiers surmontés d'un appui-tête utiliseront avantageusement des appuis-tête dont la position au-dessus du dossier pourra être aisément modifiée par l'adjonction d'organes élastiques incorporés à détente contrôlée par le dispositif cinématique du siège.

Il y a lieu de noter que le moyen de commande pourra tout aussi bien être constitué par un vérin électrique réalisé par exemple à l'aide d'un motoréducteur associé à un dispositif transformateur du mouvement de rotation de l'arbre de sortie du moteur en un mouvement de translation d'un organe cinématiquement relié à l'élément du siège ou aux leviers de liaison des vérins 9, 23, 25, 33, 35 de commande représentés aux figures.

### Revendications

1. Siège articulé de véhicule automobile monté sur une embase (3), dont l'assise (2) peut s'incliner autour d'un axe horizontal (4) porté par l'embase (3) et dont le dossier (1) est guidé sur l'assise (2) au moyen d'une articulation (5) de sorte que le dossier (1) et l'assise (2) peuvent être amenés à l'état chargé, dans des positions différentes par rapport à l'embase sous l'action d'un vérin de commande (9) attelé au dossier (1), conjuguant les déplacements angulaires de l'assise (2) et du dossier (1), caractérisé par le fait que le vérin de commande (9) est disposé entre la base inférieure d'une armature (6) de dossier articulée autour d'un axe horizontal (5) lié à l'embase (3) et ne coquille (12) reliée à l'embase (3) par l'autre axe horizontal (4) tandis qu'un capitonnage (8) de l'assise et du dossier est emboîté sur ladite armature (6) et monté déplacement relatif par rapport à ladite armature.

2. Siège selon la revendication 1, caractérisé par le fait que l'armature du dossier est constituée par une fourche dont les dents (7) sont montées à déplacement relatif par rapport au capitonnage (6) sous l'action du vérin de commande (9).

3. Siège selon l'une quelconque des revendications 1 ou 2, caractérisé par le fait que l'axe d'inclinaison (4) de l'assise (2) du siège supporte le vérin de commande (9).

4. Siège selon l'une quelconque des revendications 1, 2, 3, caractérisé par le fait que l'assise (2) est portée à articulation à l'extrémité d'une bielle (20) articulée sur l'embase (3) tandis qu'un premier vérin de commande (23) disposé entre l'embase (3) et la bielle (20) modifie la position longitudinale de l'assise et qu'un deuxième vérin de commande (25) disposé entre l'embase (3) et des leviers de renvoi (26) articulés sur l'embase (3) modifie l'inclinaison du dossier (1) ce dernier étant articulé (en 30) sur la partie postériseure de l'assise (2) et accroché par sa partie inférieure audit levier de renvoi.

5. Sièges selon la revendication 4, caractérisé par le fait qu'une extrémité du premier vérin de commande (23) est montée à déplacement longitudinal/sur l'embase conjuguant un déplacement simultané de l'assise et du dossier.

6. Sièges selon l'une quelconque des revendications 1, 2, 3, caractérisé par le fait que l'assise (2) est portée à articulation sur l'embase (3) tandis qu'un premier vérin de commande (33) disposé entre l'embase (3) et un levier de commande (36) articulé sur ladite embase (3) et cinématiquement solidaire de l'extrémité inférieure du dossier conjugue les déplacements angulaires de l'assise et du dossier et qu'un deuxième vérin (35) monté entre le levier de commande (36) et la base du dossier (1) conjugue les inclinaisons du dossier (1) avec celles de l'assise (2).

7. Sièges selon l'une quelconque des revendications 1 à 6, caractérisé par le fait que l'un au moins des moyens de commande 9, 23, 25, 33, 35 conjuguant les déplacements angulaires de l'assise et du dossier est connecté à un système à came.

## Patentansprüche

1. Verstellbarer Sitz für Kraftfahrzeuge, der auf einer Stütze (3) angeordnet ist und dessen Sitzfläche (2) um eine waagrechte von der Stütze (3) getragene Achse (4) verschwenkbar ist und dessen Lehne (1) an der Sitzfläche (2) über ein Gelenk (5) derart geführt ist, daß die Lehne (1) die Sitzfläche (2) im belasteten Zustand in unterschiedliche Positionen bezüglich der Stütze gebracht werden können unter der Einwirkung einer Steuervorrichtung (9), die an der Lehne (1) befestigt ist und die Winkelverschiebungen der Sitzfläche (2) und der Lehne (1) koppelt, dadurch gekennzeichnet, daß die Steuervorrichtung (9) zwischen dem unteren Grundteil eines Lehnenbeschlages (6), der an einer mit der Stütze (3) verbundenen waagrechten Achse (5) angelenkt ist und in einem Gehäuse (12) angeordnet ist, das mit der Stütze (3) über die andere waagrechte Achse (4) verbunden ist, wobei eine Polsterung (8) für die Sitzfläche und die Lehne im Beschlag (6) angeordnet ist und verschiebbar bezüglich dieses Beschlages ist.

2. Sitz nach Anspruch 1, dadurch gekennzeichnet, daß der Lehnenbeschlag aus einer Gabel besteht, deren Zinken (7) verschiebbar bezüglich der Polsterung (8) sind unter der Einwirkung der Steuervorrichtung (9).

3. Sitz nach einem der Ansprüche 1 oder 2, dadurch gekennzeichnet, daß die Neigungsachse (4) für die Sitzfläche (2) des Sitzes die Steuervorrichtung trägt.

4. Sitz nach einem der Ansprüche 1, 2 oder 3, dadurch gekennzeichnet, daß die Sitzfläche (2) gelenkig am Ende einer an der Stütze (3) angelenkten Pleuelstange (20) angeordnet ist, daß eine erste Steuervorrichtung (23), die zwischen der Stütze (3) und der Pleuelstange (20) angeordnet ist, die Längsposition der Sitzfläche modifiziert und daß eine zweite Steuervorrichtung (25), die zwischen der Stütze (3) und Rückholhebeln (26) angeordnet ist, welche an der Stütze (3) angelenkt sind, die Neigung der Lehne (1) modifiziert, wobei letztere bei (30) am hinteren Abschnitt der Sitzfläche (2) angelenkt ist und mit ihrem unteren Abschnitt mit dem Rückholhebel verbunden ist.

5. Sitz nach Anspruch 4, dadurch gekennzeichnet, daß ein Ende der ersten Steuervorrichtung (23) in Längsrichtung verschiebbar bei (24) mit der Stütze verbunden ist und eine gleichzeitige Verschiebung der Sitzfläche und der Lehne koppelt.

6. Sitz nach einem der Ansprüche 1, 2 oder 3, dadurch gekennzeichnet, daß die Sitzfläche (2) gelenkig an der Stütze (3) angeordnet ist, während eine erste Steuervorrichtung (33), die zwischen der Stütze (3) und einem Steuerhebel (36) angeordnet ist, welcher an der Stütze (3) angelenkt ist und kinematisch dem unteren Ende der Lehne verbunden ist, die Winkelverschiebungen der Sitzfläche und der Lehne koppelt, während eine zweite Steuervorrichtung (35), die zwischen dem Steuerhebel (36) und der Stütze der Lehne (1) angeordnet ist, die Neigungen der Lehne (1) mit denjenigen der Sitzfläche (2) koppelt.

7. Sitz nach einem der Ansprüche 1 bis 6, dadurch gekennzeichnet, daß wenigstens eine der Steuervorrichtungen (9, 23, 25, 33, 35) zum Koppeln der Winkelverschiebungen von Sitzfläche und Lehne mit einem Nockensystem verbunden ist.

## Claims

1. A pivoted motor vehicle seat which is mounted on a base means (3), in which the seat portion (2) can be inclined about a horizontal axis (4) carried by the base means (3) and in which the back portion (1) is guided on the seat portion (2) by means of a pivot (5) in such a way that the back portion (1) and the seat portion (2) can be moved, in the loaded state, into different positions with respect to the base means under the action of a control jack (9) coupled to the back portion (1), for linking together the angular movements of the seat portion (2) and the back portion (1), characterised in that the control jack (9) is disposed between the lower base of a back portion frame (6) which is pivoted about a horizontal axis (5) connected to the base means (3) and a shell (12) which is connected to the base means (3) by the other horizontal axis (4) while upholstery padding (8) of the seat portion and the back portion is fitted on to said frame (6) and mounted for relative displacement with respect to said frame.

2. A seat according to claim 1 characterised in that the frame of the back portion is formed by a fork whose teeth (7) are mounted for relative displacement with respect to the upholstery padding (8) under the action of the control jack (9).

3. A seat according to either one of claims 1 and 2 characterised in that the axis (4) for inclination of the seat portion (2) of the seat supports the control jack (9).

4. A seat according to any one of claims 1, 2 and 3 characterised in that the seat portion (2) is carried pivotably at the end of a strut (20) pivotally mounted to the base means (3) while a first control jack (23) disposed between the base means (3) and the strut (20) modifies the longitudinal position of the seat portion and a second control jack (25) disposed between the base means (3) and bell-crank levers (26) pivotally mounted to the base means (3) modifiestheinclination of the back portion (1), the latter being pivotally mounted (at 30) to the rearward part of the seat portion (2) and coupled by its lower part to said bell-crank lever.

5. A seat according to claim 4 characterised in that one end of the first control jack (23) is mounted for longitudinal displacement (at 24) on the base means, for linking simultaneous displacement of the seat portion and the back portion.

6. A seat according to any one of claims 1, 2 and 3 characterised in that the seat portion (2) is mounted pivotably on the base means (3) while a first control jack (33) disposed between the base means (3) and a control lever (36) mounted pivotally to said base means (3) and kinematically fixed with respect to the lower end of the back portion links the angular movements of the seat portion and the back portion and a second-jack (35) mounted between the control lever (36) and the base of the back portion (1) links the inclinations of the back portion (1) to those of the seat portion (2).

7. A seat according to any one of claims 1 to 6 characterised in that one at least of the control means (9, 23, 25, 33, 35) for linking the angular movements of the seat portion and the back portion is connected to a cam system.

FIG.1

FIG.2

FIG.3

FIG.4

3

FIG.5

FIG.6